# EUROPÄISCHE PATENTANMELDUNG

(11) **EP 0 764 687 A1**
(43) Veröffentlichungstag der Anmeldung: **26.03.1997**
(21) Anmeldenummer: 96113278.4
(22) Anmeldetag: 20.08.1996
(51) Int. Cl.: C08K 5/54, C08K 3/36, C08L 9/06

(54) **Organosilanverbindungen und Kieselsäure enthaltende vulkanisierbare Kautschukmischungen und Verfahren zur Herstellung**

(30) Priorität: 23.09.1995 DE 19535394; 29.11.1995 DE 19544469
(71) Anmelder: Degussa Aktiengesellschaft, 60387 Frankfurt am Main (DE)
(72) Erfinder: Görl, Udo, Dr., 53332 Bornheim (DE); Lambertz, Horst, 50354 Hürth (DE); Wolff, Wilhelm, Dr., 52072 Aachen (DE)

(57) **Zusammenfassung**

Gegenstand der Erfindung sind mit Schwefel vulkanisierbare Kautschukmischungen, enthaltend neben den üblichen Hilfsmitteln
a) 10 bis 100 Teile einer gefällten Kieselsaüre,
b) 0 bis 100 Teile eines Gummirußes, jeweils bezogen auf 100 Teile der ebenfalls
c) enthaltenen Copolymere, bestehend aus einem konjugierten Dien mit einer aromatischen Vinylkomponente, hergestellt nach dem Lösungspolymerisationsverfahren, mit einem Styrolgehalt zwichen 10 und 40 % und einem Vinylgehalt zwischen 20 und 80 %, bevorzugt 40 bis 60 %, und einer Glasübergangstemperatur von 0 bis -60 °C, oder Verschnitten dieser Copolymere mit weiteren Dienkautschuken, wobei der Anteil dieser Dienkautschuke bis zu 60 von 100 Teilen der Verschnitte beträgt,
d) und 1 bis 20 Teile, bevorzugt 5 bis 10 Teile einer Organosilanverbindung der allgemeinen Formel (I)

(RO)₃Si(CH₂)₃SCN (I)

in der bedeutet:
- R:: Alkyl, verzweigt oder unverzweigt mit 1 bis 8 C-Atomen, bevorzugt 1 bis 4 C-Atomen, bezogen auf 100 Teile Kieselsäure.

## Beschreibung

Die Erfindung betrifft ein Verfahren zur Herstellung vulkanisierbarer Kautschukmischungen und die so hergestellten Mischungen.

Einsparungen im Kraftstoffverbrauch und eine Reduzierung des Schadstoffausstoßes bekommen heute mit zunehmendem Umweltbewußtsein eine wachsende Priorität. Für den Reifenhersteller bedeutet dies, Reifen zu entwickeln, die sich durch einen sehr niedrigen Rollwiderstand bei exzellenter Naßrutschfestigkeit und guten Abriebwiderstand auszeichnen.
In zahlreichen Veröffentlichungen und Patenten werden Vorschläge gemacht, den Rollwiderstand eines Reifens und damit den Kraftstoffverbrauch zu senken. Genannt werden hierbei die Reduzierung des Rußgehaltes in der Mischung sowie die Verwendung spezieller Ruße (US Patent 4,866,131, US Patent 4,894,420). Keine dieser Lösungsvorschläge führte jedoch zu einer befriedigenden Balance zwischen dem zu erzielenden niedrigen Rollwiderstand und den ebenfalls wichtigen Reifeneigenschaften wie Naßrutschfestigkeit und Abriebwiderstand.
Erst die Verwendung von hochaktiven Kieselsäurefüllstoffen in Kombination mit dem Organosilan Bis(triethoxysilylpropyl)tetrasulfan (TESPT) im weitgehenden Austausch des Rußes in der Kautschukmischung scheint hier einen Weg aufzuzeigen, der die Herstellung eines Reifens mit gegenüber den Standardreifen deutlich reduziertem Rollwiderstand unter gleichzeitiger Beibehaltung oder sogar Verbesserung der beiden weiteren obengenannten Reifeneigenschaften ermöglicht.

Anläßlich des ACS-Meetings 1986 in New York stellte S. Wolff [1] dar, daß es durch den Einsatz von Kieselsäure in Kombination mit TESPT in einer PKW-Lauffläche auf Basis Emulsions-Styrol-Butadien Kautschuk (E-SBR) gelingt, den Rollwiderstand gegenüber der rußgefüllten Standardmischung bei weitgehendem Erhalt von Naßrutschfestigkeit und Abriebwiderstand deutlich zu reduzieren.
1. S. Wolff, 129^{th} Meeting of the Rubber Division, American Chemical Society, New York, April 8-11, 1986.
2. S. Wolff, Third Annual Meeting and Conference of Tire Science and echnology, The Tire Society, Akron, Ohio/USA, March 28-29, 1984

Eine weitere Optimierung dieses Systems hinsichtlich aller drei Eigenschaften gelang durch die Verwendung spezieller Styrol-Butadien-Polymere, hergestellt nach dem Lösungspolymerisationsverfahren (EP 0 447 066 A1), teilweise im Blend mit anderen Polymeren,
insbesondere Polybutadien und zusätzliche Verwendung neuer Kieselsäuretypen (US Patent 5,227,425) sowie speziell auf diesen Einsatz zugeschnittene Polymerblends (EP 0620250 A1) mit zum Teil drei bis vier unterschiedlichen Ausgangspolymeren.
All diesen Veröffentlichungen und Patenten ist zu eigen, daß zur Erzielung eines niedrigen Rollwiderstandes bei Erhalt oder gar Verbesserung von Naßrutschfestigkeit und Abriebwiderstand ein großer Teil bzw. der gesamte Gehalt des normalerweise verwendeten Rußfüllstoffes durch eine hochaktive Kieselsäure ersetzt wird. In allen Fällen wurde zur Erzielung der heute geforderten Reifeneigenschaften das Organosilan Bis(triethoxysilylpropyl)-tetrasulfan (TESPT) als Coupler zwischen Kieselsäure und Polymer eingesetzt.

Gegenstand der Erfindung sind mit Schwefel vulkanisierbare Kautschukmischungen, enthaltend neben den üblichen Hilfsmitteln
a) 10 bis 100 Teile einer gefällten Kieselsäure,
b) 0 bis 100 Teile eines Gummirußes, jeweils bezogen auf 100 Teile der ebenfalls
c) enthaltenen Copolymere, bestehend aus einem konjugierten Dien mit einer aromatischen Vinylkomponente, hergestellt nach dem Lösungspolymerisationsverfahren, mit einem Styrolgehalt zwischen 10 und 40 % und einem Vinylgehalt zwischen 20 und 80 %, bevorzugt 40 bis 60 %, und einer Glasübergangstemperatur von 0 bis -60 °C, oder Verschnitten dieser Copolymere mit weiteren Dienkautschuken, wobei der Anteil dieser Dienkautschuke bis zu 60 von 100 Teilen der Verschnitte beträgt,
d) und 1 bis 20 Teile, bevorzugt 5 bis 10 Teile einer Organosilanverbindung der allgemeinen Formel (I)

   (RO)₃Si(CH₂)₃SCN (I)

   in der bedeutet:
   - R:: Alkyl, verzweigt oder unverzweigt mit 1 bis 8 C-Atomen, bevorzugt 1 bis 4 C-Atomen, bezogen auf 100 Teile Kieselsäure.

Bevorzugt eingesetzt werden gefällte Kieselsäuren mit einer BET-.Oberfläche (ISO 5794/1D) zwischen 100 und 250 m²/g, insbesondere wenn sie eine CTAB-Oberfläche (ASTM D3765-92) zwischen 100 und 250 m²/g und eine DBP-Zahl zwischen 150 und 300 ml/100 g (ASTM D1208) aufweisen.

Die Kieselsäuren werden sowohl in Pulverform als auch geperlt oder granuliert zugesetzt. Es handelt sich dabei sowohl um die seit vielen Jahren bekannten Typen als auch um die Neuentwicklungen, wie sie z. B. in der DE-OS 4427137 beschrieben werden.
Entsprechend dieser Erfindung können Zusatzstoffe, wie z. B. andere anorganische Füllstoffe als die obengenannten Kieselsäure und Silikate in die Kautschukmischung eingearbeitet werden, solang die eingesetzten Mengen den Zweck dieser Erfindung nicht beeinträchtigen.
Andere anorganische Füllstoffe sind z. B. Ruße wie SRF, GPF, FEF, HAF, ISAF, FT und MT
Wird Ruß eingesetzt, verwendet man ein Gewichts-Verhältnis von Kieselsäure zu Ruß von mindesten 2:1.
Der Gesamtanteil der Füllstoffe sollte 120 Teile pro 100 Teile Polymer nicht überschreiten.

Die Fertigung von Vulkanisaten aus den erfindungsgemäßen Kautschukmischungen erfordert lediglich die Herstellung von Rohkautschukmischen nach der unten beschriebenen Methode, anschließendes Formen der Rohmischungen je nach den Erfordernissen und darauffolgende Vulkanisation in der gleichen Weise wie bei herkömmlichen Kautschukmischungen.

Für die Herstellung von Vulkanisaten gemäß dieser Erfindung werden -zusätzlich zu der obengenannten Kautschukkomponente, der Organosilanverbindung und der amorphen Kieselsäure und entsprechen der beabsichtigten Anwendung der Vulkanisate und der an sie gestellten Anforderungendie Art und Menge der Weichmacher, die Art und Menge der Verbindungen, die ein Vulkanisationssystem darstellen, wie z. B. Vulkanisationsmittel, Vulkanisationsaktivatoren (ZnO, Stearinsäure) Vulkanisationsbeschleuniger und sonstige Vulkanisationshilfsmittel, sowie die Verfahren zur Herstellung der Vulkanisate sorgfältig ausgewählt. Als die obenerwähnten Weichmacher können üblicherweise in Kautschuk verwendete Weichmacher auf Erdölbasis eingesetzt werden.

Als Vulkanisationsmittel zur Herstellung der Vulkanisate gemäß Erfindung werden Schwefelverbindungen verwendet, wie nachstehend aufgeführt. Zu diesen Schwefelverbindungen zählen z. B. Schwefel, Morpholindisulfid, Alkylphenoldisulfid, Tetramethylthiuramdisulfid und Selendimethyldithiocarbamat. Von diesen wird vorzugsweise Schwefel eingesetzt. Die obengenannten Schwefelverbindungen werden in Mengen zwischen 0,1 und 4 GT verwendet, vorzugsweise zwischen 0,5 und 3 GT, bezogen auf 100 GT des Copolymeren bzw. dessen Mischungen mit Polymeren.
Wird bei der Herstellung von Vulkanisaten gemäß dieser Erfindung als Vulkanisationsmittel eine Schwefelverbindung eingesetzt, so ist vorzugsweise zusätzlich ein Vulkanisationsbeschleuniger zu verwenden. Zu den verwendeten Vulkanisationsbeschleunigern gehören z. B. Thiazolverbindungen, wie z. B. N-Cyclohexyl-2-benzthiazolsulfenamid, N,N-Diisopropyl-2-benzthiazolsulfenamid, 2-Mercaptobenzthiazol und Dibenzthiazyldisulfid;

Guanidinverbindungen, wie z. B. Diphenylguanidin, Triphenylguanidin, Diorthotolylguanidin;
Imidazolinverbindungen, wie z. B. 2-Mercaptoimidazolin;
Thioharnstoffverbindungen, wie z. B. Diethylthioharnstoff, Dibutylthioharnstoff, Trimethylthioharnstoff und Diorthotolylthioharnstoff;
Thiuramverbindungen, wie z. B. Tetramethylthiuram-Monosulfid, Tretramethylthiuram-Disulfid, Tetraethylthiuram-Disulfid, Tetrabutylthiuram-Disulfid, Pentamethylen-Thiuram-Tetrasulfid;
Dithiocarbamatverbindungen, wie z. B. Zink-Dimethyldithiocarbamat, Zink-Diethyldithiocarbamat, Zink-Di-n-Butyldithiocarbamat, Zink-Ethylphenyldithiocarbamat, Zink-Butylphenyl-Dithiocarbamat, Natrium-Dimethyldithiocarbamat, Selen-Dimethyldithiocarbamat und Tellur-Dimethyldithiocarbamat;
Xanthatverbindungen, wie z. B. Zink-Dibutylxanthat; Verbindungen;
Die genannten Vulkanisationsbeschleuniger werden einer Menge zwischen 1 und 20 GT, vorzugsweise zwischen 0,5 und 5 GT, bezogen auf 100 GT des Copolymeren bzw. dessen Abmischungen mit den anderen Polymeren eingesetzt.

Das Organosilan und die Kieselsäure werden vorzugsweise vor dem Einmischen in die beanspruchten Kautschukmischungen miteinander gemischt oder auch zur Reaktion gebracht, wie in der US-PS 5,116,886 (EP-B-0442 143) beschrieben.

Es ist nicht unbedingt erforderlich, die gesamte verwendete Kieselsäuremenge vorab mit dem Organosilan gemäß Formel (I) zu modifizieren. Es ist auch möglich, nur einen Teil vorab zu modifizieren und den Rest ohne vorherige Modifizierung einzusetzen.

Ist Ruß als weiterer Füllstoff für die herzustellende Kautschukmischung vorgesehen, besteht in einer anderen Variante die Möglichkeit, das Organosilan gemäß Formel (I) ganz oder zum Teil als Ruß/Organosilan-Abmischung einzusetzen. Diese wird dann vorzugsweise in Form eines Granulats mit einem Gehalt von 30 bis 60 Gew.-% Organosilan bzw. 70 bis 40 Gew.-% Ruß verwendet. Die Herstellung ähnlicher Granulate wird in der DE-PS 27 47 277 (US-PS 4,128,438) beschrieben und kann hier analog durchgeführt werden.

Die Rohkautschukmischung wird gemäß nachstehend beschriebener Methode hergestellt. Die obengenannten Kautschukkomponenten, die Organosilanverbindung, die amorphe Kieselsäure, und der gegebenenfalls vorhandene Ruß, sowie gegebenenfalls einen Weichmacher werden in einem Knetgerät, z. B. einem Banbury-Innenmischer, bei einer Temperatur von ca. 120 bis 200°C 3 bis 10 Minuten lang geknetet, dann ein Vulkanisationsmittel wie Beschleuniger und Schwefel oder ein sonstiges Vulkanisationshilfsmittel hinzugefügt und entweder im Banbury-Innenmischer oder auf einer Mischwalze bei geeigneten Temperaturen weitere 5 bis 30 Minuten gemischt und die fertige Kautschukmischung anschließend als Kautschukfell oder in Form von Streifen ausgezogen.

Die gummitechnische Prüfung der aus den erfindungsgemäßen Mischungen hergestellten Vulkanisate zeigt, daß sich durch Verwendung von 3-Thiocyanatopropyltrialkoxysilanen als Organosilan in Kombination mit Kieselsäuren in Styrol-Butadien-Kautschuken, hergestellt nach dem Lösungspolymerisationsverfahren, ein gegenüber der Verwendung von TESPT, bei ansonsten weitgehend gleichem Wertebild, deutlich besserer Abriebwiderstand erzielen läßt.

Diese Vulkanisate finden Verwendung bei der Herstellung von Formkörpern und strukturellen Komponenten von Reifen.

Die nachfolgenden Beispiele machen die Vorteile der verwendeten Organosilan gemäß Formel (I) gegenüber dem Standardsilan TESPT in dem Polymersystem gemäß Anspruch 1 und in Kombination mit den Kieselsäuren gemäß Anspruch 2 deutlich.

### Prüfnormen für die Auswertung

| | Prüfmethode | Einheit |
|---|---|---|
| Zugfestigkeit | DIN 53 504 | MPa |
| Modul 300 % | DIN 53 504 | MPa |
| Bruchdehnung | DIN 53 504 | % |
| Shore-Härte | DIN 53 505 | - |
| Stoßelastizität | DIN 53 512 | % |
| DIN-Abrieb | DIN 53 516 | mm³ |
| MTS-Prüfung | DIN 53 513 | |

In den Anwendungsbeispielen werden folgende Namen und Abkürzungen benutzt:
- Buna VSL 1950 S 25: ölgestreckter L-SBR der Firma Bayer AG mit einem Vinylgehalt von 50 % und einem Styrolgehalt von 25 %; die Glasübergangstemperatur liegt bei -25 C.
- Buna VSL 1955 S 25: ölgestreckter L-SBR der Firma Bayer AG mit einem Vinylgehalt von 55 % und einem Styrolgehalt von 25 %; die Glasübergangstemperatur liegt bei -20 C.
- Buna CB 24: Butadien-Kautschuk mit 1,4 cis-Anteil von mind. 96 %.
- Naftolen ZD: aromatisches Öl der Firma Chemetal.
- Protector G 35: Ozonschutzwachs der Firma Fuller.
- Vulkanox 4020: Alterungsschutzmittel der BAYER AG
- Vulkacit D: Diphenylguanidin, Beschleuniger der BAYER AG
- Vulkacit CZ: Benzothiazyl-2-cyclohexylsulfenamid, Beschleuniger der BAYER AG.
- Ultrasil VN 3 GR: gefällte Kieselsäure mit einer N₂-Oberfläche von 175 m²/g, einer CTAB-Oberfläche von ca. 170 m²/g und einer DBP-Zahl von 220 ml/100g (Degussa AG).
- Ultrasil 3370 GR: gefällte Kieselsäure gemäß Patent DE P 44 27 137.9 mit einer N₂-Oberfläche von 170 m²/g, einer CTAB-Oberfläche von 165 m²/g und einer DBP-Zahl von 250 ml/100g (Degussa AG).
- Si 69: Bis(triethoxysilylpropyl)tetrasulfan, Organosilan der Degussa AG.
- Si 264: 3-Thiocyanatopropyltriethoxysilan, Organosilan der Degussa AG.

### Beispiel 1: Vergleich Si 264 gegen Si 69 in einer PKW-Lauffläche mit Ultrasil VN 3 GR als Füllstoff

| | **1** | **2** |
|---|---|---|
| **Rezeptur** | | |
| Buna VSL 1950 S 25 | 96 | 96 |
| Buna CB 24 | 30 | 30 |
| Ultrasil VN 3 GR | 80 | 80 |
| Si 69 | 6,4 | - |
| Si 264 | - | 6,4 |
| ZnO RS | 3 | 3 |
| Stearinsäure | 2 | 2 |
| Naftolen ZD | 10 | 10 |
| Protector G 35 | 1 | 1 |
| Vulkanox 4020 | 1,5 | 1,5 |
| Vulkacit D | 2 | 2 |
| Vulkacit CZ | 1,7 | 2 |
| Schwefel | 1,4 | 1,7 |

| **Rheometer: 165°C** | | |
|---|---|---|
| t_{10%} [min] | 5,9 | 3,9 |
| t_{90%} [min] | 30,0 | 16,8 |
| t_{95%} [min] | 57,8 | 47,5 |
| t_{90%}-t_{10%} [min] | 24,2 | 12,9 |

| **Vulkanisatdaten: 165 °C/t**_{**95%**} | | |
|---|---|---|
| Zugfestigkeit [MPa] | 14,1 | 13,7 |
| Modul 300 % [MPa] | 10,0 | 9,3 |
| Shore-A-Härte | 74 | 75 |
| DIN-Abrieb [mm³] | 97 | 69 |

| **Viskoelastische Daten gemäß DIN 53 513** | | |
|---|---|---|
| tan δ 0°C | 0,437 | 0,424 |
| tan δ 60°C | 0,164 | 0,172 |

Si 264 in Kombination mit Ultrasil VN 3 GR zeigt gegenüber Si 69 deutliche Verbessetungen im Abrieb hei ansonsten weitgehend gleichen Vulkanisateigenschaften. Beim Rheometertest liegt der Vorteil des Si 264 in der schnelleren Ausvulkanisation.

### Beispiel 2: Vergleich Si 264 gegen Si 69 in einer PKW-Lauffläche mit Ultrasil 3370 GR als Füllstoff

| | **1** | **2** |
|---|---|---|
| **Rezeptur** | | |
| Buna VSL 1955 S 25 | 96 | 96 |
| Buna CB 24 | 30 | 30 |
| Ultrasil 3370 GR | 80 | 80 |
| Si 69 | 6,4 | - |
| Si 264 | - | 6,4 |
| ZnO RS | 3 | 3 |
| Stearinsäure | 2 | 2 |
| Naftolen ZD | 14 | 14 |
| Protector G 35 | 1 | 1 |
| Vulkanox 4020 | 1,5 | 1,5 |
| Vulkacit D | 2 | 2 |
| Vulkacit CZ | 1,7 | 2 |
| Schwefel | 1,4 | 1,7 |

| **Vulkanisatdaten: 165°C/t**_{**95%**} | | |
|---|---|---|
| Zugfestigkeit [MPa] | 14,6 | 14,1 |
| Modul 300 % [MPa] | 7,7 | 7,4 |
| Bruchdehnung [ % ] | 470 | 460 |
| Stoßelastizität [ % ] | 33 | 34 |
| Shore-A-Härte | 66 | 67 |
| DIN-Abrieb [mm³] | 111 | 75 |

| **Viskoelastische Daten gemäß DIN 53 513** | | |
|---|---|---|
| E' 0°C [MPa] | 26,6 | 31,2 |
| E'' 0°C [MPa] | 12,2 | 13,3 |
| tan δ 0°C | 0,437 | 0,427 |
| E' 60°C [MPa] | 9,7 | 10,3 |
| E'' 60°C [MPa] | 1,1 | 1,3 |
| tan δ 60°C | 0,116 | 0,123 |

Die Kombination Ultrasil 3370 GR/Si 264 zeigt deutliche Vorteile im Abrieb gegenüber Ultrasil 3370 GR/Si 69.

## Patentansprüche

1. Mit Schwefel vulkanisierbare Kautschukmischungen, enthaltend neben den üblichen Hilfsmitteln
a) 10 bis 100 Teile einer gefällten Kieselsäure,
b) 0 bis 100 Teile eines Gummirußes,
jeweils bezogen auf 100 Teile der ebenfalls enthaltenen Copolymere,
bestehend aus einem konjugierten Dien mit einer aromatischen Vinylkomponente, hergestellt nach dem Lösungspolymerisationsverfahren, mit einem Styrolgehalt zwischen 10 und 40 % und einem Vinylgehalt zwischen 20 und 80 %, bevorzugt 40 bis 60 %, und einer Glasübergangstemperatur von 0 bis -60 °C, oder Verschnitten dieser Copolymere mit weiteren Dienkautschuken, wobei der Anteil dieser Dienkautschuke bis zu 60 von 100 Teilen der Verschnitte beträgt, und 1 bis 20 Teile, bevorzugt 5 bis 10 Teile einer Organosilanverbindung der allgemeinen Formel (I)
(RO)₃Si(CH₂)₃SCN (I)
in der bedeutet:
R: Alkyl, verzweigt oder unverzweigt mit 1 bis 8 C-Atomen, bevorzugt 1 bis 4 C-Atomen, bezogen auf 100 Teile Kieselsäure.

2. Kautschukmischungen gemäß Anspruch 1,
dadurch gekennzeichnet, daß sie als Dienkautschuke Polyisopren, Naturkautschuk und/oder ein Polybutadien mit einem 1,4 cis Bindungsanteile von >90 % enthalten.

3. Kautschukmischungen gemäß den Ansprüchen 1 und 2,
dadurch gekennzeichnet, daß sie Kieselsäuren mit einer spez. Oberfläche zwischen 100 und 250 m²/g, CTAB-Oberflächen zwischen 100 und 250 m²/g und einer DBP-Zahl zwischen 150 und 300 ml/100 g in Mengen von 10 bis 100 Teilen, bevorzugt 40 bis 80 Teile, bezogen auf 100 Teile Polymer als Pulver oder in staubarmer Form, enthalten.

4. Kautschukmischungen gemäß den Ansprüchen 1 bis 3,
dadurch gekennzeichnet, daß sie Kieselsäuren enthalten, die vor dem Einmischen in die Kautschukmischung mit dem Organosilan gemäß Formel (I) vermischt oder zur Reaktion gebracht wurden.

5. Kautschukmischungen gemäß den Ansprüchen 1 bis 3,
dadurch gekennzeichnet, daß sie eine gegebenenfalls granulatförmige Abmischung Organosilan (gemäß Formel (I)/Ruß enthalten.

6. Verfahren zur Herstellung von Kautschukmischungen gemäß den Ansprüchen 1 bis 5,
dadurch gekennzeichnet, daß man die Kautschukkomponente(n), die Organosilanverbindung, die Kieselsäure und den gegebenenfalls vorhandenen Ruß, sowie gegebenenfalls einen Weichmacher in einem Knetgerät, gegebenenfalls einem Banbury-Innenmischer, bei einer Temperatur von 120 - 200 °C 3 bis 10 Minuten lang knetet, dann ein Vulkanisations-mittel wie Beschleuniger und Schwefel oder ein sonstiges Vulkanisationshilfsmittel hinzufügt und entweder im Banbury-Innenmischer oder auf einer Mischwalze bei geeigneten Temperaturen weitere 5 bis 30 Minuten mischt und die fertige Kautschukmischung anschließend als Kautschukfell oder in Form von Streifen zieht.

7. Verwendung der Kautschukmischungen gemäß den Ansprüchen 1 bis 5 zur Herstellung von Formkörpern und strukturellen Komponenten von Reifen mit einem verringerten Abrieb.

8. Formkörper und strukturelle Komponenten für Reifen mit einem verringerten Abrieb gemäß Anspruch 7, dadurch gekennzeichnet, daß sie neben den üblichen Hilfsmitteln enthalten:
a) 10 bis 100 Teile einer gefällten Kieselsäure,
b) 0 bis 100 Teile eines Gummirußes, jeweils bezogen auf 100 Teile der ebenfalls
c) enthaltenen Coplymere,
bestehend aus einem konjugierten Dien mit einer aromatischen Vinylkomponente,hergestellt nach dem Lösungspolymerisationsverfahren, mit einem Styrolgehalt zwischen 10 und 40 % und einem Vinylgehalt zwischen 20 und 80 %, bevorzugt 40 bis 60 %, und einer Glasübergangstemperatur von 0 bis -60 °C, oder Verschnitten dieser Copolymere mit weiteren Dienkautschuken, wobei der Anteil dieser Dienkautschuke bis zu 60 von 100 Teilen der Verschnitte beträgt.
